# EUROPEAN PATENT SPECIFICATION

(11) **EP 3 072 667 B1**
(45) Date of publication and mention of the grant of the patent: **13.03.2019**
(21) Application number: 16162042.2
(22) Date of filing: 23.03.2016
(51) Int. Cl.: B29C 45/84

(54) **TRANSPARENT MEMBER-EQUIPPED COVER OF INJECTION MOLDING MACHINE, AND INJECTION MOLDING MACHINE**
TRANSPARENTE ELEMENTAUSGERÜSTETE ABDECKUNG EINER SPRITZGIESSMASCHINE UND SPRITZGIESSMASCHINE
COUVERCLE TRANSPARENT, ÉQUIPÉ D'UN ÉLÉMENT, D'UNE MACHINE DE MOULAGE PAR INJECTION ET MACHINE DE MOULAGE PAR INJECTION

(30) Priority: 27.03.2015 JP 2015067687
(43) Date of publication of application: 28.09.2016
(73) Proprietor: SUMITOMO HEAVY INDUSTRIES, LTD., Tokyo 141-6025 (JP)
(72) Inventor: TAMURA, Atsuro, Chiba, 263-0001 (JP); HANO, Katsunobu, Chiba, 263-0001 (JP)
(74) Representative: Louis Pöhlau Lohrentz

(56) References cited:
- EP-A1- 0 511 650
- JP-A- 2001 133 959
- JP-A- 2004 261 852

## Description

### Field of the Invention

The present invention relates to a transparent member-equipped cover of an injection molding machine, and an injection molding machine.

### Description of Related Art

An injection molding machine has a cover and a transparent member which covers an opening portion of the cover (refer to, for example, Japanese Unexamined Patent Application Publication No. 2004-261852) . A user of the injection molding machine can visually recognize the inside of the cover through the transparent member.

Conventionally, improvement in visibility of the inside of a cover has been desired. JP 2004 261852 is directed to the use of a shutter covering a sight glass in order to avoid soiling thereof. EP 0 511 650 A1 is directed to an antistatic film comprising a chemically adsorbed film of straight chain molecules each containing a conductive group and covalently bonded to a chargeable substrate via a Si group.

### SUMMARY OF THE INVENTION

The present invention has been made in view of the above problem and has a main object to provide a transparent member-equipped cover of an injection molding machine, in which visibility of the inside of a cover is improved.

In order to solve the above problem, according to an aspect of the present invention, there is provided a transparent member-equipped cover of an injection molding machine including: a cover of the injection molding machine; a transparent member which covers an opening portion of the cover; and an antifouling part wherein the antifouling part electrically connects the cover and the transparent member, thereby preventing the transparent member from becoming polluted.

According to the aspect of the present invention, a transparent member-equipped cover of an injection molding machine, in which visibility of the inside of a cover is improved, is provided.

### BRIEF DESCRIPTION OF THE DRAWINGS

Fig. 1 is a view when a transparent member-equipped cover of an injection molding machine according to an embodiment is viewed from the inside.
Fig. 2 is a cross-sectional view taken along line II-II of Fig. 1.

### DETAILED DESCRIPTION OF THE INVENTION

Hereinafter, an embodiment of the present invention will be described with reference to the drawings. However, in each drawing, identical or corresponding configurations are denoted by identical or corresponding reference numerals and description thereof is omitted.

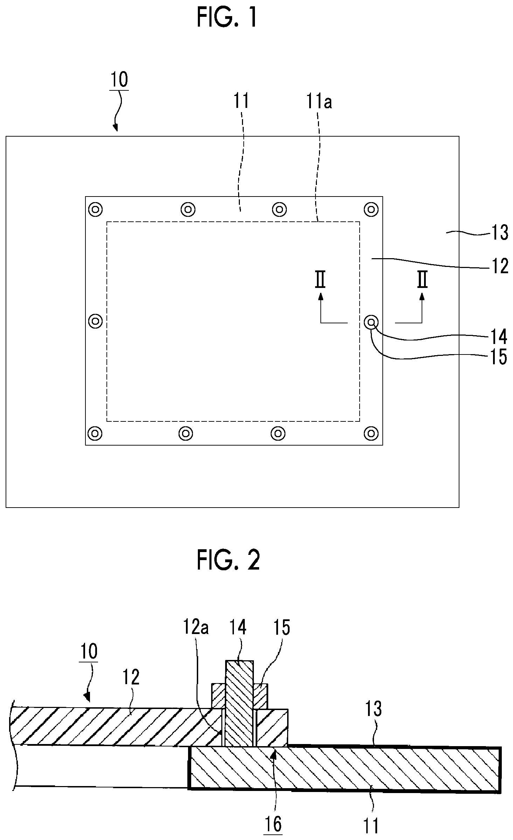

Fig. 1 is a view when a transparent member-equipped cover of an injection molding machine according to an embodiment is viewed from the inside. Fig. 2 is a cross-sectional view taken along line II-II of Fig. 1. In Fig. 2, a thick line represents a cross-section of a coating film 13.

An injection molding machine has a transparent member-equipped cover 10. The transparent member-equipped cover 10 has a cover 11 and a transparent member 12 which covers an opening portion of the cover 11.

The cover 11 is a safety door which covers the side of, for example, a mold clamping unit. The mold clamping unit performs mold closing, mold clamping, and mold opening of a mold unit. The safety door is slidably disposed between a user and the mold clamping unit. If a user opens the safety door, a molding operation of the injection molding machine is temporarily prohibited. On the other hand, if a user shuts the safety door, the prohibition of the molding operation of the injection molding machine is released.

The cover 11 is formed of metal and is grounded for electrification prevention. On the cover 11, the coating film 13 is formed for decoration or rust-proofing. The coating film 13 is formed of organic matter, and therefore, the coating film 13 has insulation properties.

The transparent member 12 covers an opening portion 11a of the cover 11. A user can visually recognize the inside of the cover 11 through the transparent member 12. As the transparent member 12, a resin plate, a glass plate, or the like is used.

The transparent member 12 is mounted on the cover 11 by screwing or the like. For example, a male screw 14 is provided at the cover 11, and the male screw 14 penetrates a through-hole 12a of the transparent member 12. A female screw 15 is screwed to the tip of the male screw 14, and the female screw 15 presses the transparent member 12 against the cover 11.

In addition, the disposition of the male screw 14 and the female screw 15 may vary. For example, a configuration may be made in which a female screw is formed in the cover 11 and a male screw which is screwed to the female screw presses the transparent member 12 against the cover 11.

The transparent member 12 is mounted on the cover 11 at a plurality of mounting positions. The male screw 14 and the female screw 15 are disposed at each mounting position. In addition, a mounting method is not limited to the screwing.

The transparent member-equipped cover 10 has an antifouling part 16 which prevents the transparent member 12 from becoming polluted. It is possible to visually recognize the inside of the cover 11 in a state where the transparent member 12 is polluted less, and thus it is possible to improve visibility of the inside of the cover 11.

The antifouling part 16 electrically connects, for example, the cover 11 and the transparent member 12. The transparent member 12 is grounded, and therefore, electrification of the transparent member 12 can be prevented, and thus adhesion of dust or the like due to static electricity can be suppressed.

The antifouling part 16 is composed of, for example, an opening portion which exposes the cover 11 without forming the coating film 13. The opening portion is formed by partially removing the coating film 13 after the formation of the coating film 13. However, it is also possible to form the opening portion by using a masking tape or the like at the time of the formation of the coating film 13.

In the opening portion of the coating film 13, the cover 11 and the transparent member 12 come into contact with each other, thereby being electrically connected. It is favorable if the opening portion of the coating film 13 is formed at a position at which the cover 11 and the transparent member 12 overlap, and there is no particular limitation. However, the opening portion of the coating film 13 may be formed at, for example, a mounting position of the transparent member 12 on the cover 11. The adhesion between the cover 11 and the transparent member 12 is good.

In addition, it is favorable if the cover 11 and the transparent member 12 are electrically connected, and the cover 11 and the transparent member 12 may be in contact with each other through a conductive member.

An embodiment of the transparent member-equipped cover of an injection molding machine has been described above. However, the present invention is not limited to the above-described embodiment, and various modifications and improvements can be made within the scope of the concept of the present invention as stated in the appended claims.

For example, the antifouling part 16 of the above-described embodiment is the opening portion of the coating film 13. However, the configuration of the antifouling part 16 is not limited thereto. For example, the antifouling part 16 may be an antistatic film which is stuck to the transparent member 12, a wax film which is applied to the transparent member 12, or the like.

Further, the antifouling part 16 of the above-described embodiment prevents adhesion of dust or the like due to static electricity. However, the antifouling part 16 may prevent adhesion or the like of grease. Further, the antifouling part 16 may prevent scratching, in addition to prevention of adhesion of dirt.

The transparent member-equipped cover 10 of the above-described embodiment is a safety door which covers one face of the mold clamping unit. However, it may be a purge cover or the like which prevents the scattering of a molding material from an injection unit. The injection unit fills the inside of the mold unit with a molding material. A purge refers to an operation replacing the molding material of the injection unit.

## Claims

1. A transparent member-equipped cover of an injection molding machine, comprising:
a cover (11) of the injection molding machine;
a transparent member (12) which covers an opening portion (11a) of the cover (11); and
**characterized by** that the transparent member-equipped cover comprises
an antifouling part (16) wherein the antifouling part (16) electrically connects the cover (11) and the transparent member (12), thereby preventing the transparent member (12) from becoming polluted.

2. The transparent member-equipped cover of an injection molding machine according to claim 1,
wherein the cover (11) is formed of metal and is grounded for electrification prevention.

3. The transparent member-equipped cover of an injection molding machine according to any one of the claims 1 or 2, wherein the transparent member (12) is a resin plate or a glass plate.

4. A transparent member-equipped cover of an injection molding machine according to any one of claims 1 to 3, wherein on the cover (11) a coating film (13) is applied and wherein the antifouling part (16) is an opening portion of the coating film (13).

5. An injection molding machine comprising the transparent member-equipped cover according to any one of the claims 1 to 4.

## Patentansprüche

1. Mit einem durchsichtigen Element ausgestattete Abdeckung einer Spritzgießmaschine, umfassend
eine Abdeckung (11) der Spritzgießmaschine;
ein durchsichtiges Element (12), das einen Öffnungsabschnitt (11a) der Abdeckung (11) abdeckt; und
**dadurch gekennzeichnet, dass** die mit einem durchsichtigen Element ausgestattete Abdeckung
ein Antiverschmutzungsteil (16), wobei das Antiverschmutzungsteil (16) die Abdeckung (11) und das durchsichtige Element (12) elektrisch verbindet, wodurch verhindert wird, dass das durchsichtige Element (12) verschmutzt wird, umfasst.

2. Mit einem durchsichtigen Element ausgestattete Abdeckung einer Spritzgießmaschine nach Anspruch 1,
wobei die Abdeckung (11) aus Metall gebildet ist und zum Verhindern einer elektrischen Aufladung geerdet ist.

3. Mit einem durchsichtigen Element ausgestattete Abdeckung einer Spritzgießmaschine nach einem der Ansprüche 1 oder 2,
wobei das durchsichtige Element (12) eine Harzplatte oder eine Glasplatte ist.

4. Mit einem durchsichtigen Element ausgestattete Abdeckung einer Spritzgießmaschine nach einem der Ansprüche 1 bis 3, wobei auf der Abdeckung (11) ein Beschichtungsfilm (13) aufgebracht ist und wobei das Antiverschmutzungsteil (16) ein Öffnungsabschnitt des Beschichtungsfilms (13) ist.

5. Spritzgießmaschine, die die mit einem durchsichtigen Element ausgestattete Abdeckung nach einem der Ansprüche 1 bis 4 umfasst.

## Revendications

1. Un couvercle équipé d'un élément transparent d'une machine de moulage par injection, comprenant :
un couvercle (11) de la machine de moulage par injection ;
un élément transparent (12) qui couvre une partie d'ouverture (11a) du couvercle (11) ; et
**caractérisé en ce que** le couvercle équipé d'un élément transparent comprend
un élément antisalissure (16), dans lequel l'élément antisalissure (16) relie électriquement le couvercle (11) et l'élément transparent (12), empêchant ainsi l'élément transparent (12) d'être pollué.

2. Le couvercle équipé d'un élément transparent d'une machine de moulage par injection selon la revendication 1,
dans lequel le couvercle (11) est formé de métal et est mis à la masse pour prévention d'électrisation.

3. Le couvercle équipé d'un élément transparent d'une machine de moulage par injection selon l'une quelconque des revendications 1 ou 2, dans lequel l'élément transparent (12) est une plaque de résine ou une plaque de verre.

4. Le couvercle équipé d'un élément transparent d'une machine de moulage par injection selon l'une quelconque des revendications 1 à 3, dans lequel sur le couvercle (11), est appliqué un film de revêtement (13) et dans lequel l'élément antisalissure (16) est une partie d'ouverture du film de revêtement (13).

5. Une machine de moulage par injection comprenant le couvercle équipé d'un élément transparent selon l'une quelconque des revendications 1 à 4.
